# EUROPÄISCHE PATENTSCHRIFT

(11) **EP 0 593 720 B1**
(45) Veröffentlichungstag und Bekanntmachung des Hinweises auf die Patenterteilung: **25.10.1995**
(21) Anmeldenummer: 93909866.1
(22) Anmeldetag: 30.04.1993
(51) Int. Cl.: B21J 15/04, F16D 41/20

(54) **VORRICHTUNG ZUM SETZEN EINES SELBSTBOHRENDEN KLEMMBEFESTIGERS**
DEVICE FOR SETTING A SELF-DRILLING CLAMPING FASTENER
DISPOSITIF PERMETTANT DE POSER UNE ATTACHE DE SERRAGE AUTOFOREUSE

(30) Priorität: 06.05.1992 DE 4215008
(43) Veröffentlichungstag der Anmeldung: 27.04.1994
(73) Patentinhaber: SFS Industrie Holding AG, 9435 Heerbrugg (CH)
(72) Erfinder: GASSER, Daniel, CH-9445 Rebstein (CH)
(74) Vertreter: Ludescher, Hans
(86) Internationale Anmeldenummer: EP9301044
(87) Internationale Veröffentlichungsnummer: WO9322081

(56) Entgegenhaltungen:
- EP-A- 0 456 269
- WO-A-92/22394
- GB-A- 2 187 240
- US-A- 3 659 449

## Beschreibung

Die Erfindung betrifft eine Vorrichtung zum Setzen eines selbstbohrenden Klemmbefestigers, mit in einem hülsenförmigen Aufnahmeteil gehaltenen Klemmbacken zum Erfassen eines Zugdornes des Klemmbefestigers, wobei der Aufnahmeteil an seinem den Klemmbacken abgewandten Ende ein Außengewinde aufweist und in eine Gewindebohrung einer mit einem Drehantrieb kuppelbaren Antriebshülse eingreift, wobei der Aufnahmeteil gegen Verdrehen arretierbar ist.

Bei einer bekannten Vorrichtung zum Setzen von Blindnieten (EP-A-0 213 101) ist in einem Gehäuse eine topfartige Büchse drehbar gelagert, wobei diese Büchse einerseits mit einem Innengewinde ausgestattet und andererseits fest mit dem Drehantrieb verbunden ist. Ein die Klemmbacken für einen Zugdorn des Blindniets tragender Aufnahmeteil ist an seinem rückwärtigen Ende mit einem Außengewinde versehen, wobei dieses Außengewinde mit dem Innengewinde der Büchse in Eingriff steht. Beim Bohrvorgang werden sämtliche Teile dieser Vorrichtung gedreht, also auch das außen liegende Gehäuse. Nach Beendigung des Bohrvorganges muß die Drehrichtung der Vorrichtung umgedreht werden, wozu das Gehäuse an sich stehen bleiben muß. Entweder kann hier das Gehäuse durch Festhalten am weiteren Verdrehen gehindert werden, oder aber das Gehäuse bewegt sich bei der geänderten Drehrichtung ein geringes Stück in Richtung zum Drehantrieb und steht dann an einem Gehäuseteil an.

Nach dem Setzen des Blindniets muß die Drehrichtung des Antriebs abermals geändert werden, um den die Klemmbacken tragenden Aufnahmeteil wieder in die Ausgangslage zu bringen. Zu diesem Zweck muß das Gehäuse aber von Hand festgehalten werden, um infolge des Gewindeeingriffes überhaupt eine Axialbewegung des Aufnahmeteils zu bewirken. Einerseits ist es problematisch, wenn bei einem Setzgerät in einen angetriebenen Teil von Hand einzugreifen ist, andererseits ist dadurch die Gefahr gegeben, daß bei unbeabsichtigtem Eingreifen, z.B. beim Bohrvorgang, infolge der großen Hitzeentwicklung für den Benutzer Verbrennungen entstehen können.

Ferner ist ein Setzgerät für Blindnieten bekannt geworden (EP-A-0 456 269), welches inetwa auf dem gleichen Prinzip beruht wie das vorstehend erläuterte Setzgerät. Es wird hier lediglich zusätzlich eine Kupplung zwischen der das Innengewinde aufweisenden Antriebshülse und einem direkt in die Antriebsvorrichtung einspannbaren Antriebsteil vorgesehen, wobei diese Kupplung dadurch lösbar ist, als beim Einziehen des mit dem Außengewinde versehenen Abschnittes des Aufnahmeteils nach einer bestimmten Wegstrecke das freie Ende desselben anstößt und den direkt mit der Antriebsvorrichtung verbundenen Antriebsteil zurückdrängt, bis sich die Kupplung löst. Auch bei dieser Anordnung ist es unbedingt erforderlich, daß der Benützer von Hand am Gehäuse eingreift, um eben nach einem Bohrvorgang, während dem sich der gesamte Setzgeräteteil dreht, die Ziehbewegung einzuleiten.

Die vorliegende Erfindung hat sich daher zur Aufgabe gestellt, eine Vorrichtung der eingangs genannten Art zu schaffen, durch welche beim gesamten Arbeitsablauf ein feststehendes äußeres Gehäuse vorhanden ist, so daß der Benützer der Vorrichtung nicht in drehende Teile eingreifen oder diese festhalten muß.

Erfindungsgemäß gelingt dies dadurch, daß der hülsenförmige Aufnahmeteil in einer Führungshülse axial verschiebbar, jedoch gegen Verdrehen gesichert gehalten ist, daß die Führungshülse und die Antriebshülse in einer Antriebsdrehrichtung miteinander kraft- und/oder formschlüssig kuppelbar sind, daß die Führungshülse und die Antriebshülse in einem fest mit dem Gehäuse des Antriebs verbindbaren Gehäuse verdrehbar gelagert sind, daß die Führungshülse mittels im Gehäuse verschiebbar gehaltener Rastelemente gegen Verdrehen arretierbar ist, und daß die Führungshülse samt Aufnahmeteil nach Art eines Freilaufs nur in einer Drehrichtung im Gehäuse verdrehbar ist.

Da der hülsenförmige Aufnahmeteil ein von der Führungshülse getrennter Teil ist, kann der Aufnahmeteil wohl in axialer Richtung und somit bei Eingriff des Gewindeteils in die Gewindebohrung in axialer Richtung zum Setzen des selbstbohrenden Klemmbefestigers verschoben werden, es muß jedoch von diesem Aufnahmeteil keinerlei Funktion bezüglich des Drehantriebs übernommen werden. Es ist lediglich dafür zu sorgen, daß der hülsenförmige Aufnahmeteil gegenüber der Führungshülse gegen Verdrehen gesichert gehalten ist.

Von besonderem Vorteil ist es eben, daß die Führungshülse und die Antriebshülse miteinander kuppelbar sind, so daß die Kraftübertragung beim Bohrvorgang von der Antriebshülse auf die Führungshülse übergeht und somit die äußeren Gehäuseteile feststehend ausgebildet werden können. Es ist also nie die Notwendigkeit gegeben, daß der Benützer der Vorrichtung einen drehenden Teil aufhalten bzw. stillsetzen muß. Im Gegenteil, der Benützer kann bei einem Setzvorgang ohne weiteres eine Hand am Gehäuse selbst haben, denn dieser Teil kann sich überhaupt nie verdrehen, weil er eben fest mit dem Gehäuse des Antriebs verbindbar ist.

Durch die vorliegende Erfindung ist die notwendige Umstellung von der Bohrbewegung in die Zugbewegung in wesentlich wirksamerer Weise bewerkstelligt worden.

Schlußendlich wirkt sich gerade die Maßnahme positiv aus, daß die Führungshülse samt Aufnahmeteil nach Art eines Freilaufs nur in einer Drehrichtung im Gehäuse verdrehbar ist. Auch diese Maßnahme trägt dazu bei, daß ein festes Gehäuse erzielbar ist, da gerade durch diese Freilaufwirkung die Möglichkeit geschaffen wird, den hülsenförmigen Aufnahmeteil wiederum in die Ausgangslage zurückzubringen.

Durch die Verwirklichung der erfindungsgemäßen Maßnahmen ist es möglich geworden, sowohl den Bohrvorgang als auch den Setzvorgang für einen selbstbohrenden Klemmbefestiger in einer Drehrichtung des Antriebsgerätes zu bewirken, ohne daß irgendwelche Schaltfunktionen oder manuelle Eingriffe im Bereich des Gehäuses oder dergleichen notwendig wären. Es ist also keinesfalls irgendein manueller Eingriff in einen drehenden Teil notwendig, so daß auch Verletzungsgefahren gerade durch das in sich geschlossene und sich niemals drehende Gehäuse eliminiert werden können.

Bei der vorliegenden Erfindung ist ferner vorteilhaft, daß die Antriebshülse einen direkt mit dem Drehantrieb kuppelbaren Antriebsteil axial verschiebbar aufnimmt, wobei der Antriebsteil an dem dem Drehantrieb abgewandten Ende Mitnahmeklauen aufweist, welche mit einem im Inneren des Antriebsteils ausgebildeten Klauenring in Wirkverbindung bringbar sind.

Auf diese Art ist eine sehr einfache Kuppelmöglichkeit zwischen dem Antriebsteil und der Antriebshülse möglich, wobei es lediglich der in axialer Richtung ineinander greifenden Klauen bedarf, um die Mitnahme sowohl in der einen als auch in der anderen Drehrichtung zu bewirken. Außerdem ist gerade durch diese einfache Ausbildung der Kupplung zwischen der Antriebshülse und dem Antriebsteil eine einfache Lösung der Kupplung möglich.

In diesem Zusammenhang ist es zweckmäßig, wenn die Klauen koaxial zur Mittelachse des Antriebsteils und der Antriebshülse angeordnet axial frei auskragen und an ihren in Drehrichtung gesehen seitlichen Begrenzungen zueinander konvergierende Angriffsflächen aufweisen, wobei der freie Endbereich der Klauen von einer in Drehrichtung gesehen schräg verlaufenden Ebene gebildet ist. Durch diese beidseitig spitzwinklig verlaufenden Angriffsflächen ist eine sehr einfache Möglichkeit geschaffen worden, ein drehmomentabhängiges Abstellen der Kupplung zu bewirken, da der federbelastete Antriebsteil je nach Neigungswinkel der ineinander greifenden Klauen bei weiterlaufendem Antrieb früher oder später in Achsrichtung abgehoben wird. Durch die schräge Ebene am freien Ende dieser Klauen ist in einfacher Weise bewirkt worden, daß in der einen Drehrichtung ein früheres Auskuppeln erfolgt als in der anderen Drehrichtung, und daß nach dem Auskuppeln bei Umschalten der Drehrichtung in der entgegengesetzten Drehrichtung wiederum eine Mitnahme erfolgt, obwohl die Kupplung in axialer Richtung noch nicht zur Gänze gegenseitig eingreift. Da aber gerade zum Zurückbewegen der Vorrichtung in die Ausgangslage praktisch keine großen Kräfte übertragen werden müssen, genügt dieser geringfügige Eingriff, um die Rückführbewegung zu veranlassen.

Gemäß einem weiteren Merkmal der vorliegenden Erfindung ist vorgesehen, daß die zwischen der Führungshülse und der Antriebshülse angeordnete und nur in einer Drehrichtung wirksame Kupplung als Schlingfederkupplung ausgeführt ist. Es wird also bei der erfindungsgemäßen Anordnung die Wirkung einer auf dem Kupplungssektor bekannten Konstruktion ausgenutzt, um auf relativ engem Raum eine effektive Kupplung, die auch leicht lösbar ist, einzusetzen. Da diese Kupplung zwischen der Führungshülse und der Antriebshülse keine Überlastkupplung ist, also keine drehmomentabhängige Abschaltung durchführen muß, genügt die satte, schraubenlinienförmige Anlage dieser Schlingfederkupplung auf den einander zugewandten Enden der Führungshülse und der Antriebshülse. Gerade durch diese Schlingfederkupplung ist eine besonders kleine Bauweise der Vorrichtung möglich.

In diesem Zusammenhang ist es vorteilhaft, daß die Führungshülse und die Antriebshülse an ihren einander zugewandten Endbereichen gleiche Außendurchmesser aufweisen, wobei die Schlingfederkupplung über annähernd gleiche Längenbereiche der Führungshülse und der Antriebshülse geschlungen ist.

Diese Kupplung kann also durchgehend satt auf den beiden einander zugewandten Endbereichen aufliegen, wobei allein durch die bei Verdrehen in der richtigen Richtung entstehende radiale Anpreßkraft eine fast feste Verbindung zwischen der Antriebshülse und der Führungshülse hervorgerufen wird.

Ein weiteres Merkmal sieht vor, daß die Führungshülse an den an den Umschlingungsbereich durch die Schlingfederkupplung anschließenden Abschnitt radial nach außen abragende, fingerartige Fortsätze aufweist, zwischen welche axial ausgerichtete Nasen eines die Schlingfederkupplung koaxial umschließenden Rohrstückes eingreifen, wobei den abstehenden Nasen abgewandt ein Schlitz oder eine Öffnung zum Eingriff eines radial abstehenden Endes der Schlingfederkupplung vorgesehen ist. Durch diese Maßnahmen ist einerseits stets ein rascher Eingriff der Schlingfederkupplung sofort bei Drehbeginn gewährleistet, andererseits ist aber ein sofortiges Auskuppeln vorhanden, wenn die Antriebshülse in der entgegengesetzten Richtung verdreht wird. Es wird dann nämlich durch das Halten des radial abstehenden Endes die Schlingfederkupplung in einer lockeren Stellung mit geringfügigem Abstand von der Oberfläche der Antriebshülse und der Führungshülse gehalten. Andererseits kann das das radial abstehende Ende der Schlingfeder aufnehmende Rohrstück nur über einen geringen Winkelbereich gegenüber der Führungshülse verdreht werden, da diese ja mit den abstehenden Nasen zwischen die radial nach außen abragenden, fingerartigen Fortsätze eingreift. Die Schlingfeder der Schlingfederkupplung wird somit wohl gegenüber der Führungshülse festgehalten, die Antriebshülse kann sich jedoch innerhalb dieser Schlingfederkupplung bewegen, ohne daß eine Kraftübertragung auf die Kupplung möglich wäre.

Eine besonders vorteilhafte Maßnahme gerade eben im Hinblick darauf, daß das außen liegende Gehäuse feststehend, also nicht drehend ausgebildet ist, liegt darin, daß die Rastelemente zur Arretierung der Drehbewegung der Führungshülse im Gehäuse Teil eines Tiefenanschlages sind, von einem Tiefenanschlag auslösbar sind und/oder mittels eines an der Außenoberfläche des Gehäuses zugänglichen, manuell bedienbaren Betätigungselementes auslösbar sind. Diese Rastelemente werden also durch eine axiale Verschiebung bei Auftreffen eines Tiefenanschlages nach dem Bohrvorgang eingerastet, wobei die Rastelemente eben Teil dieses Tiefenanschlages sein können. Es ist aber auch möglich, daß die Rastelemente durch die Bewegung des Tiefenanschlags ausgelöst werden. Im Rahmen der Erfindung ist es aber auch denkbar, an der Oberfläche des Gehäuses beispielsweise einen Druckknopf vorzusehen, durch welchen Rastelemente, die die Führungshülse gegen ein weiteres Verdrehen arretieren, eingeschoben werden. Dabei ist es gleichgültig, ob diese Rastelemente in axialer oder in radialer Richtung verschoben werden.

Eine vorteilhafte Maßnahme liegt weiters darin, daß der zwischen den radial abstehenden Fortsätzen der Führungshülse in Umfangsrichtung gesehen verbleibende Freiraum größer ist als die Summe der Abmessungen eines der im Gehäuse verschiebbaren Rastelemente und einer der vom Rohrstück abstehenden Nasen in Umfangsrichtung gemessen. Bei eingeschobenen Rastelementen greifen also sowohl die Nasen des Rohrstückes ein, welches die Schlingfederkupplung umgibt, als auch die Rastelemente, welche nach Beendigung des Bohrvorganges verschoben werden. Es wird also in einfacher Weise einerseits die Wirkung der Schlingfederkupplung aufgehoben und andererseits ein weiteres Verdrehen der Führungshülse verhindert.

In diesem Zusammenhang ist dann eben vorgesehen, daß in Arretierstellung der Führungshülse sowohl die im Gehäuse verschiebbaren Rastelemente als auch die vom Rohrstück abstehenden Nasen von einander axial gegenüberliegenden Seiten zwischen die radial abstehenden Fortsätze der Führungshülse eingreifen. Den radial abstehenden Fortsätzen kommt also eine Doppelfunktion zu, nämlich einerseits die relative Drehbewegung des die Schlingfederkupplung umgebenden Rohrstückes gegenüber der Führungshülse zu begrenzen und andererseits das Zusammenwirken mit den einschiebbaren Rastelementen zu bewerkstelligen.

Bei einer sehr einfachen und wirkungsvollen Ausführungsform wird vorgeschlagen, daß die Rastelemente Teil eines rohrförmigen, federbelastet in axialer Richtung gegen das Gehäuse verschiebbaren Tiefenanschlags sind, welcher den vorderen Bereich der Führungshülse koaxial umgibt. Es ist daher in einfacher Weise ermöglicht worden, das Umschalten auf eine Zugbewegung zum Setzen des Klemmbefestigers zu bewerkstelligen, indem bei Auftreffen des Tiefenanschlages auf der Oberfläche des Werkstückes dieser Tiefenanschlag in Achsrichtung zurückgeschoben wird, somit die Rastelemente entsprechend in das Gehäuse einschiebt und damit die weitere Verdrehung der Führungshülse verhindert.

Damit ein Rückführen der Führungshülse und des Aufnahmeteils in die Ausgangslage in einfacher Weise möglich ist, wird vorgeschlagen, daß zwischen der Führungshülse und dem Gehäuse oder dem einen Gehäuseteil bildenden Tiefenanschlag ein als Freilauf wirkendes Radiallager eingesetzt ist. Es kann dadurch mittels eines einfachen, an sich bekannten Maschinenbauelementes eine Arretierung in der einen Drehrichtung ausgelöst werden. Beim Bohrvorgang kann sich also die Führungshülse ohne Probleme gegenüber dem Gehäuse verdrehen, wogegen bei Verdrehen in der anderen Richtung - wie dies bei der Rückführung der Vorrichtung in die Ausgangslage notwendig ist - eine Sperre eintritt. Es wird dann in wirkungsvoller Weise wiederum die Gewindeverbindung zwischen der Antriebshülse und dem mit dem Außengewinde versehenen Teil der Aufnahmehülse in Aktion gebracht.

Weitere erfindungsgemäße Merkmale und besondere Vorteile werden in der nachstehenden Beschreibung anhand der Zeichnungen noch näher erläutert. Es zeigen:
- Fig. 1: einen Schnitt durch die erfindungsgemäße Vorrichtung in der Darstellung vor Beginn des Bohrvorgangs;
- Fig. 2: einen Schnitt nach der Linie II-II in Fig. 1;
- Fig. 3: einen Schnitt durch die Vorrichtung wie in Fig. 1, wobei jedoch die Teile in der Stellung gezeigt sind, wie sie nach dem fast fertigen Setzen des Klemmbefestigers angeordnet sind;
- Fig. 4: einen Schnitt nach der Linie IV-IV in Fig. 3;
- Fig. 5: einen weiteren Längsschnitt durch die Vorrichtung, wobei bei dieser Stellung der einzelnen Teile der Zugdorn bereits abgerissen und die Klemmbefestigung fertig gesetzt ist;
- Fig. 6: einen Schnitt nach der Linie VI-VI in Fig. 5;
- Fig. 7 bis 10: verschiedene Darstellungen der ineinander greifenden Klauen zur Kupplung zwischen der Antriebshülse und einem Antriebsteil.

Die Vorrichtung besteht im wesentlichen aus einem hülsenförmigen Aufnahmeteil 1 zum Halten von Klemmbacken 2, einer Führungshülse 3, einer Antriebshülse 4 und einem Gehäuse 5.

Die Führungshülse 3 ist an ihrem vorderen Endbereich bis auf eine mittige Durchgangsöffnung 6 durch ein Abschlußelement 7 verschlossen. Dieses Abschlußelement 7 kann beispielsweise mit einem Gewinde versehen sein und so in das Ende der Führungshülse 3 eingeschraubt werden. Das Abschlußelement 7 bildet auch den axialen Anschlag für die Aufnahmehülse 1. Durch die schrägen Flächen 8 an der Innenseite der Aufnahmehülse 1 und an der Außenseite der Klemmbacken 2 erfolgt beim Zurückziehen des Aufnahmeteils 1 ein Verspannen der Klemmbacken 2 am eingesetzten Zugdorn 9 eines selbstbohrenden Klemmbefestigers 10. Die Klemmbacken 2 weisen radial nach außen abstehende Fortsätze 11 auf, welche in parallel zueinander liegenden Längsnuten 12 und 13 in der Aufnahmehülse 1 und in der Führungshülse 3 angeordnet sind. Den Klemmbacken 2 kommt somit eine zweifache Bedeutung zu, nämlich einerseits den Zugdorn beim Setzvorgang zu halten und andererseits eine Verdrehsicherung zwischen der Aufnahmehülse 1 und der Führungshülse 3 zu bewirken. Die Klemmbacken 2 sind in Richtung zum freien Ende der Vorrichtung durch eine Feder 14 belastet. Es ist ferner ein in axialer Richtung verschiebbarer Bolzen 15 zwischen die Backen 2 eingesetzt, welcher ebenfalls durch eine Feder 16 belastet ist. Dieser Bolzen 15 bewirkt nach Beendigung des Setzvorganges das federbelastete Ausstoßen des abgerissenen Zugdornes 9.

An dem den Klemmbacken 2 abgewandten Endbereich der Aufnahmehülse 1 ist ein Gewindebolzen 17 vorgesehen, welcher mit einem entsprechenden Außengewinde 18 versehen ist.

Die Führungshülse 3 ist zweckmäßig aus zwei Teilen zusammengesetzt, und zwar einerseits aus der eigentlichen Hülse und andererseits aus dem am einen Ende eingeschraubten Gewindebolzen 17. Es wäre aber auch möglich, diese beiden Abschnitte einstückig miteinander auszubilden oder den Gewindebolzen 17 als Hohlkörper auszuführen.

Die Antriebshülse 4 weist einen Einsatz 19 auf, welcher mit einem Innengewinde 20 versehen ist. Dieser Einsatz 19 ist sozusagen in Form einer Schraubenmutter ausgeführt. Das Außengewinde 18 des Gewindebolzens 17 und das Innengewinde 20 des Einsatzes 19 stehen somit miteinander in Wirkverbindung. Zwischen der Antriebshülse 4 und dem Gehäuse 5 sind entsprechende Radiallager 21 eingesetzt. Das Gehäuse 5 ist an seinem rückwärtigen Ende mit einem Gewindeeinsatz 22 versehen, um dadurch das Gehäuse 5 fest mit einem entsprechenden, rohrförmigen Anschlußteil 23 des Motorantriebs 24 zu verbinden. Zur Übertragung der Drehbewegung vom Antrieb 25 auf die Antriebshülse 4 ist ein mit dem Drehantrieb 25 kuppelbarer Antriebsteil 26 vorgesehen, wobei die gegenseitige Kupplung über Klauen 27 erfolgt.

Der Antriebsteil 26 ist dabei formschlüssig und axial verschiebbar auf den Drehantrieb 25 aufgesteckt, gegenüber diesem mit einer Feder 28 abgestützt und somit immer bestrebt, über die Klauen 27 mit der Antriebshülse 4 in Wirkverbindung zu bleiben. Dieser Antriebsteil weist also an seinem dem Drehantrieb 25 abgewandten Ende Mitnahmeklauen 27 auf, welche mit einem im Inneren des Antriebsteils 4 ausgebildeten Klauenring 29 in Wirkverbindung bringbar sind. Die Klauen 27 am Antriebsteil 26 und die Klauen 30 am Klauenring 29 sind koaxial zur Mittelachse des Antriebsteils 26 und der Antriebshülse 4 angeordnet und kragen frei gegeneinander aus. An ihren in Drehrichtung gesehen seitlichen Begrenzungen weisen diese Klauen 27 und 30 zueinander konvergierende Angriffsflächen 31, 32 auf. Der freie Endbereich 33 der Klauen 30 wird von einer in Drehrichtung gesehen schräg verlaufenden Ebene gebildet. Es ist somit gewährleistet, daß in der einen Drehrichtung (wie noch näher erläutert wird) ein früheres Auskuppeln stattfinden kann als in der anderen Drehrichtung.

Die Führungshülse 3 und die Antriebshülse 4 sind in einer Antriebsdrehrichtung miteinander kraft- und/oder formschlüssig kuppelbar. Die zweckmäßigste Ausführung liegt dabei darin, daß diese Kupplung als Schlingfederkupplung 34 ausgebildet ist. Eine Schlingfederkupplung ist ein Federelement, welches aus einem Federdraht mit in der Regel quadratischem bzw. rechteckförmigem Querschnitt schraubenlinienförmig die beiden stumpf aneinander stoßenden Teile umschlingt. Die Führungshülse 3 und die Antriebshülse 4 weisen dabei an den einander zugewandten Endbereichen gleiche Außendurchmesser auf, wobei die Schlingfederkupplung 34 über annähernd gleiche Längenbereiche der Führungshülse 3 und der Antriebshülse 4 geschlungen ist.

Die Führungshülse 3 weist an den den Umschlingungsbereich durch die Schlingfederkupplung 34 anschließenden Abschnitt radial nach außen abragende, fingerartige Fortsätze 35 auf. Zwischen diese Fortsätze 35 greifen axial ausgerichtete Nasen 36 eines die Schlingfederkupplung 34 koaxial umschließenden Rohrstückes 37 ein. Für die abstehenden Nasen 36 ist am Rohrstück 37 ein Schlitz oder eine Öffnung zum Eingriff eines radial abstehenden Endes 38 der Schlingfederkupplung 34 vorgesehen.

Damit es zwischen den in axialer Richtung aufeinander folgenden Abschnitten der Führungshülse 3 und der Antriebshülse 4 nicht zu Abnützungserscheinungen bei nicht gegenseitiger Kupplung kommt, ist zwischen diesen beiden Teilen ein Axiallager 39 vorgesehen.

Für den Setzvorgang nach Durchbohren des Werkstückes ist es notwendig, daß der hülsenförmige Aufnahmeteil 1 und die Führungshülse 3 keine weitere Drehbewegung ausführen und somit gegenüber dem Gehäuse arretiert sind. Zu diesem Zweck sind verschiebbar gehaltene Rastelemente 40 vorgesehen, welche in die Drehbewegung der Führungshülse 3 eingreifen können. Diese Rastelemente 40 sind bei der gezeigten Ausführung Teil eines Tiefenanschlages 41, werden also bei Auftreffen des Tiefenanschlages auf das zu durchbohrende Werkstück 42 in axialer Richtung verschoben.

Im Rahmen der Erfindung wäre es aber auch denkbar, daß diese Rastelemente 40 in irgendeiner Weise von einem Tiefenanschlag auslösbar sind, also nicht unmittelbar Teil dieses Tiefenanschlags darstellen. Es wäre auch möglich, diese Rastelemente mittels eines an der Außenoberfläche des Gehäuses zugänglichen, manuell bedienbaren Betätigungselementes einzuschalten bzw. zu lösen.

Eine kraft- und/oder formschlüssige Kupplung zwischen der Führungshülse 3 und der Antriebshülse 4 ist aber auch denkbar, wenn die Schlingfederkupplung einfach weggelassen wird, so daß praktisch nurmehr eine kraftschlüssige Kupplung zwischen dem Antriebsteil und den, den Niet aufnehmenden Drehteilen über das Gewinde des mittigen Bolzens gewährleistet ist. Die erwähnte Kupplung ist aber nur dann im Einsatz, wenn ein Niet eingesetzt ist und von diesem ein entsprechendes Gegendrehmoment übertragen wird. Dem Drehmoment der Antriebsvorrichtung wird also erst dann ein entsprechendes Drehmoment entgegengesetzt, wenn der Niet einen Bohrvorgang ausführen muß, so daß praktisch damit infolge des Gewindebolzens ein Anziehen des Nietdornes und somit ein Spannen desselben erfolgt. Dadurch kann das Drehmoment entsprechend übertragen werden, wobei außerdem gewährleistet ist, daß auch die Niethülse am Übertragen des Drehmomentes mitwirkt. Sobald dann kein Drehmoment mehr vorhanden ist, was auch dann der Fall ist, wenn das Loch durchbohrt ist oder wenn die Hülse mit dem Tiefenanschlag zum Einsatz kommt, wird ein weiteres Drehen des Nietaufnahmeteiles verhindert, worauf die Zugbewegung eingeleitet wird.

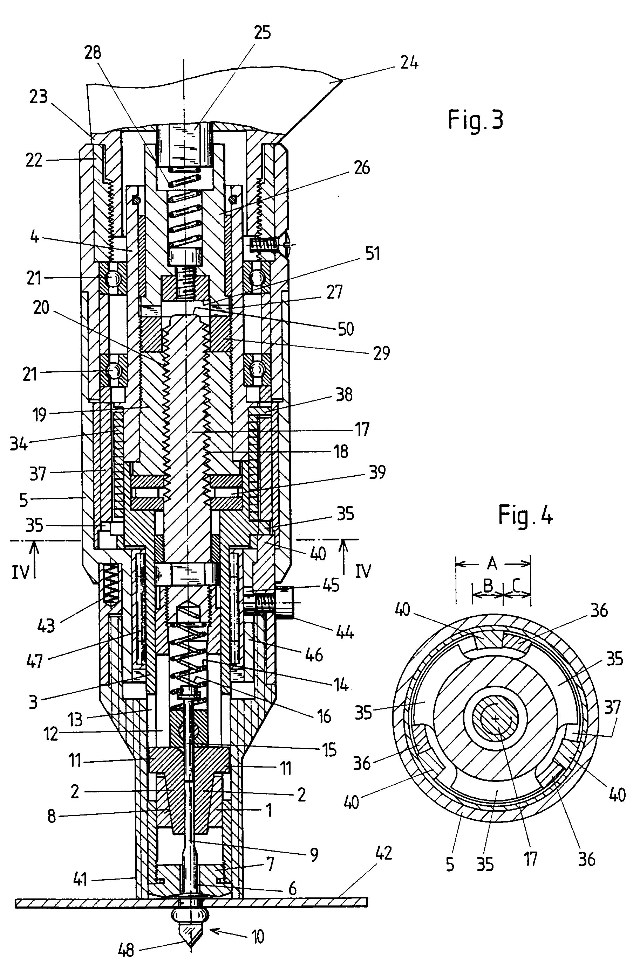

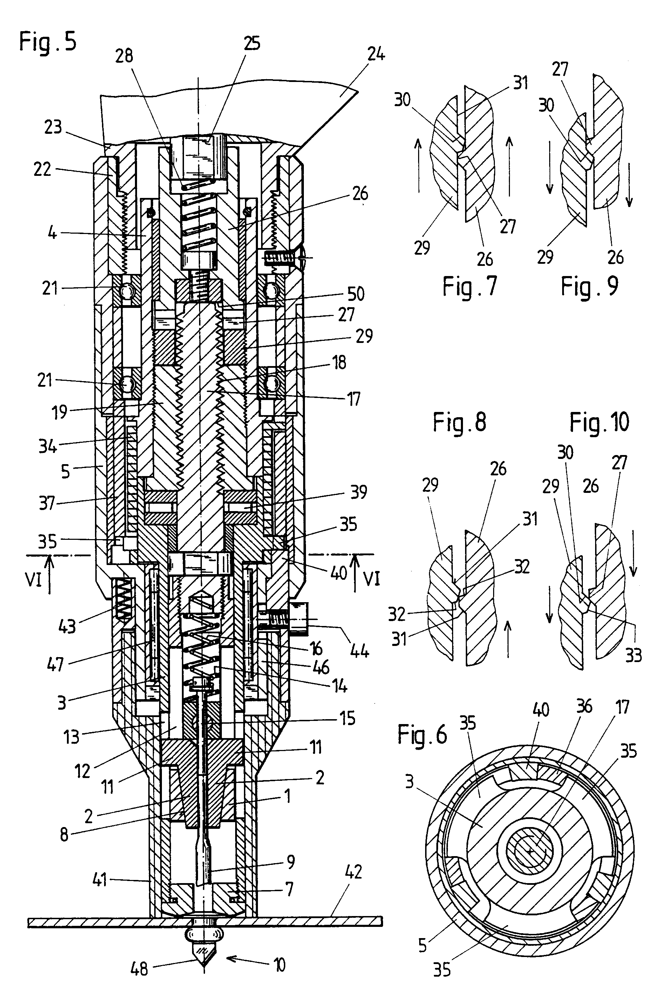

Der zwischen den radial abstehenden Fortsätzen 35 der Führungshülse 3 in Umfangsrichtung gesehen verbleibende Freiraum A ist größer bemessen als die Summe der Abmessungen B und C eines der im Gehäuse verschiebbaren Rastelemente 40 und einer der vom Rohrstück 37 abstehenden Nasen 36 in Umfangsrichtung gemessen. Wie gerade aus den Darstellungen gemäß den Fig. 4 und 6 zu ersehen ist, greifen in Arretierstellung der Führungshülse 3 sowohl die im Gehäuse 5 verschiebbaren Rastelemente 40 als auch die vom Rohrstück 37 abstehenden Nasen 36 von einander axial gegenüberliegenden Seiten zwischen die radial abstehenden Fortsätze 35 der Führungshülse 3 ein.

Wie schon erwähnt, sind die Rastelemente 40 bei der gezeigten Ausführung Teil eines Tiefenanschlags 41. Dieser Tiefenanschlag 41 ist dabei rohrförmig ausgebildet und mittels einer Feder 43 in Richtung zu seinem freien Ende hin gedrückt. Der Tiefenanschlag 41 bildet also eine geschlossene Fortsetzung des Gehäuses 5, da dieser den vordersten Bereich der Führungshülse 3 umgreift. Dabei ist lediglich eine in Grenzen gehaltene, axiale Verschiebung dieses Tiefenanschlags 41 vorgesehen. Es ist aber an keiner Stelle des Gehäuses 5 bzw. des daran anschließenden Tiefenanschlags 41 eine von außen sichtbare oder spürbare Drehbewegung vorhanden. Damit sich der Tiefenanschlag 41 gegenüber dem Gehäuse 5 oder sonstigen Teilen nicht verdrehen kann und außerdem die Axialverschiebung des Tiefenanschlags 41 gegenüber dem Gehäuse 5 begrenzt bleibt, ist eine Schraube 44 vorgesehen, deren freies Ende in einen Schlitz 45 eines innen liegenden Bundes 46 des Gehäuses 5 eingreift.

Die Führungshülse 3 samt Aufnahmeteil 1 darf im Gehäuse nur in einer Drehrichtung verdrehbar sein, damit bei einer Umkehr der Drehrichtung die Rückführung der Vorrichtung in die Ausgangslage stattfinden kann. Es ist daher zwischen dem Gehäuse 5 bzw. dem inneren Bund 46 dieses Gehäuses 5 und der Führungshülse 3 ein in einer Richtung sperrender Freilauf eingesetzt. In der besonderen gezeigten Ausführungsform handelt es sich dabei um ein als Freilauf wirkendes Radiallager 47. Dies läßt beim Bohrvorgang wohl ein Verdrehen der Führungshülse 3 innerhalb des Gehäuses zu, verriegelt jedoch die Führungshülse 3, wenn aufgrund einer besonderen Belastung des Gewindebolzens in der anderen Drehrichtung eine Drehbelastung auf die Führungshülse 3 in der anderen Drehrichtung auftreten sollte.

Es soll nun nachstehend ein kompletter Arbeitsablauf mit einer erfindungsgemäßen Vorrichtung näher erläutert werden:

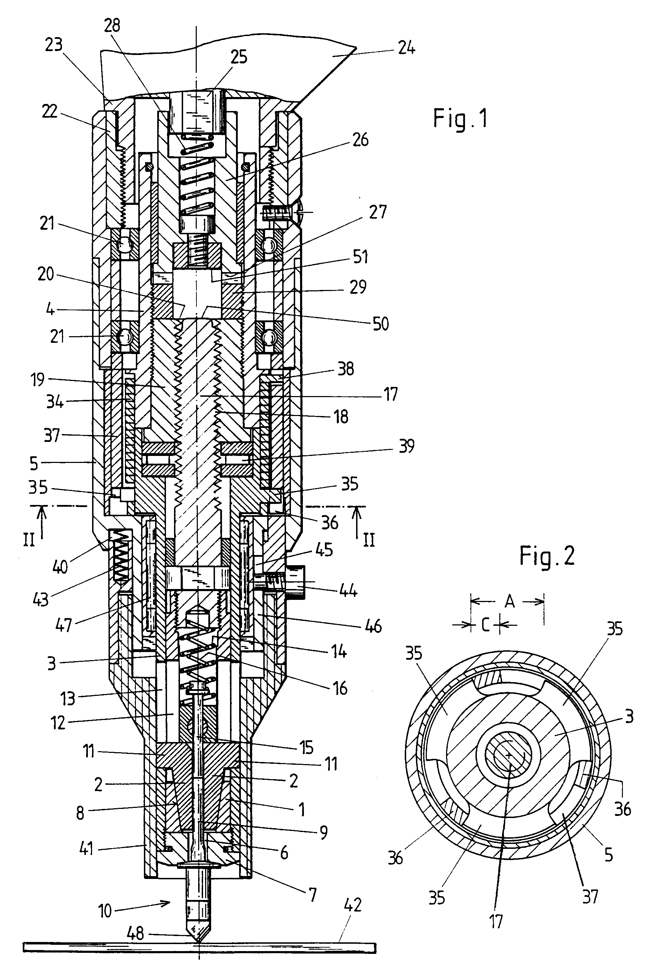

Die Vorrichtung bzw. die einzelnen Teile der Vorrichtung sind in einer Ausgangslage, wie sie in Fig. 1 dargestellt sind. Das Gehäuse 5 ist fest und ohne Verdrehmöglichkeit mit dem Gehäuseteil 23 der Antriebsvorrichtung 24 verbunden. Der selbstbohrende Klemmbefestiger wird an der Vorderseite der Vorrichtung eingeschoben, wobei zum nachträglichen Setzen des Klemmbefestigers zwischen den Klemmbacken 2 ein Zugdorn zu liegen kommt. Wenn nun der Drehantrieb 25 in Tätigkeit gesetzt wird, dreht sich auch der Antriebsteil 26 mit, wobei die Klauen 27 und 30 miteinander in einem Eingriff stehen, wie dies der Fig. 7 entnommen werden kann. Es wird somit auf jeden Fall die Antriebshülse 4 mitgedreht. Die Schlingfederkupplung 34 tritt in Aktion, da diese die beiden einander zugewandten Endbereiche der Antriebshülse 4 und der Führungshülse 3 fest umschlingen kann. Das die Schlingfederkupplung 34 umgebende Rohrstück 37 liegt ja mit den radial abragenden Nasen 36 an den Fortsätzen 35 an, wobei in dieser Stellung und in dieser Drehrichtung des antreibenden Teils, nämlich der Antriebshülse, ein Festziehen der Schlingfederkupplung gewährleistet ist. Es wird also in dieser Lage auch die Führungshülse in der entsprechenden Drehrichtung mitgenommen, so daß der Bohrvorgang im Werkstück 42 erfolgen kann.

Sobald nun der Bohrvorgang beendet ist, wenn also die Bohrspitze 48 an der Rückseite des Werkstückes 42 austritt, dann bewegt sich die gesamte Vorrichtung zusammen mit der Antriebsvorrichtung in Richtung zum Werkstück 42 hin, so daß der Tiefenanschlag 41 auf der Oberfläche des Werkstückes 42 zur Anlage kommt. Der Tiefenanschlag 41 wird dann axialer Richtung zurückgeschoben, so daß also die Rastelemente 40 mit den Nasen 36 des Rohrstückes 37 bzw. den Fortsätzen 35 der Führungshülse 3 in Eingriff kommen. Es wird somit das weitere Verdrehen der Führungshülse 3 verhindert, wobei sich durch die geringfügige weitere Drehbewegung des Rohrstückes 37 die Schlingfederkupplung 34 löst. Der Drehantrieb 25 wird aber nach wie vor in der gleichen Richtung verdreht und auch die Klauen 27 und 30 bleiben in gegenseitigem Eingriff. Es wird nun also lediglich noch die Antriebshülse 4 weitergedreht und somit auch der Einsatz 19 derselben, so daß sich der Gewindebolzen 17 nach Art einer Gewindespindel in axialer Richtung gegen den Antriebsteil 26 hin bewegen muß. Der zu setzende Klemmbefestiger wird also nicht mehr weiter verdreht, sondern es wird lediglich der Zugdorn 9 fester erfaßt und in axialer Richtung zurückgezogen, um dadurch den Klemmbefestiger zu setzen und die Hülse an der Rückseite des Werkstückes 42 zu verformen. Es erfolgt also beim Weiterdrehen des Drehantriebs 25 lediglich eine axiale Bewegung des hülsenartigen Aufnahmeteils 1 in der Führungshülse 3. Wenn dann bei dieser Bewegung die entsprechende Spannkraft erreicht ist und der Zugdorn 9 an der vorgesehenen Soll-Bruchstelle abreißt, bewegt sich der hülsenförmige Aufnahmeteil 1 weiterhin in diese Richtung, da ja der Drehantrieb 25 immer noch aktiv ist. Es wird dann aber unmittelbar darauf der freie Endbereich 50 des Gewindebolzens 17 auf den unteren Abschluß 51 des Antriebsteils 26 auftreffen und diesen entgegen der Kraft der Feder 28 gegen den Drehantrieb 25 drücken. Dadurch erfolgt ein langsames Auskuppeln der Klauen 27 und 30, bis eine Stellung erreicht wird, wie sie in Fig. 8 dargestellt ist. Klauen 27 können dann einander infolge der schrägen Endbereiche 33 überrasten, da ja der Antriebsteils 26 federbelastet gegen den Drehantrieb 25 verschoben werden kann. Es erfolgt somit nunmehr eine Unterbrechung des Drehantriebs. Das gegenseitige Auskuppeln der Klauen 27 und 30 ist jedoch nur bis zu einem solchen Maß erfolgt, daß bei einer Drehrichtungsumkehr des Drehantriebs 25 die Klauen in der entgegengesetzten Drehrichtung einander wieder erfassen können. Es genügt dabei ein geringer Eingriff, wie dies in den Fig. 9 und 10 dargestellt ist, um eine Kraftübertragung vom Antriebsteil 26 auf die Antriebshülse 4 zu erreichen. Durch diese entgegengesetzte Drehrichtung wird bewirkt, daß sich der Gewindebolzen 17 infolge des Gewindeeingriffes wiederum in die vordere Endlage hin bewegt, bis der hülsenförmige Aufnahmeteil 1 wiederum am Abschlußelement 7 am vorderen Ende der Führungshülse 3 auftrifft. Dann kommt es zu einer Drehmomentabschaltung, da nämlich die Angriffsflächen 31 der Klauen 27 und 30 einen relativ flachen Winkel aufweisen. Es erfolgt dann hörbares Rattergeräusch, so daß die Antriebsvorrichtung abgeschaltet wird und wodurch gewährleistet ist, daß die Vorrichtung wieder in der Ausgangsstellung angelangt ist.

Durch die erfindungsgemäßen Maßnahmen ist also ein konstruktiver Aufbau möglich geworden, der den ganzen Arbeitsablauf ohne händischen Eingriff in drehende Teile gestattet.

## Patentansprüche

1. Vorrichtung zum Setzen eines selbstbohrenden Klemmbefestigers (10), mit in einem hülsenförmigen Aufnahmeteil (1) gehaltenen Klemmbacken (2) zum Erfassen eines Zugdornes (9) des Klemmbefestigers (10), wobei der Aufnahmeteil (1) an seinem den Klemmbacken (2) abgewandten Ende ein Außengewinde (18) aufweist und in eine Gewindebohrung (20) einer mit einem Drehantrieb (25) kuppelbaren Antriebshülse (4) eingreift, wobei der Aufnahmeteil (1) gegen Verdrehen arretierbar ist, da**durch gekennzeichnet,** daß der hülsenförmige Aufnahmeteil (1) in einer Führungshülse (3) axial verschiebbar, jedoch gegen Verdrehen gesichert gehalten ist, daß die Führungshülse (3) und die Antriebshülse (4) in einer Antriebsdrehrichtung miteinander kraft- und/oder formschlüssig kuppelbar sind, daß die Führungshülse (3) und die Antriebshülse (4) in einem fest mit dem Gehäuse (24) des Antriebs (25) verbindbaren Gehäuse (5) verdrehbar gelagert sind, daß die Führungshülse (3) mittels im Gehäuse (5) verschiebbar gehaltener Rastelemente (40) gegen Verdrehen arretierbar ist, und daß die Führungshülse (3) samt Aufnahmeteil (1) nach Art eines Freilaufes nur in einer Drehrichtung im Gehäuse (5) verdrehbar ist.

2. Vorrichtung nach Anspruch 1, dadurch gekennzeichnet, daß die Antriebshülse (4) einen direkt mit dem Drehantrieb (25) kuppelbaren Antriebsteil (26) axial verschiebbar aufnimmt, wobei der Antriebsteil (26) an dem dem Drehantrieb (25) abgewandten Ende Mitnahmeklauen (27) aufweist, welche mit einem im Inneren des Antriebsteils (4) ausgebildeten Klauenring (29) in Wirkverbindung bringbar sind.

3. Vorrichtung nach Anspruch 2, dadurch gekennzeichnet, daß die Klauen (27, 30) koaxial zur Mittelachse des Antriebsteils (26) und der Antriebshülse (4) angeordnet axial frei auskragen und an ihren in Drehrichtung gesehen seitlichen Begrenzungen zueinander konvergierende Angriffsflächen (31, 32) aufweisen, wobei der freie Endbereich (33) der Klauen (30) von einer in Drehrichtung gesehen schräg verlaufenden Ebene gebildet ist.

4. Vorrichtung nach den Ansprüchen 1 bis 3, dadurch gekennzeichnet, daß die zwischen der Führungshülse (3) und der Antriebshülse (4) angeordnete und nur in einer Drehrichtung wirksame Kupplung als Schlingfederkupplung (34) ausgeführt ist.

5. Vorrichtung nach den Ansprüchen 1 und 4, dadurch gekennzeichnet, daß die Führungshülse (3) und die Antriebshülse (4) an ihren einander zugewandten Endbereichen gleiche Außendurchmesser aufweisen, wobei die Schlingfederkupplung (34) über annähernd gleiche Längenbereiche der Führungshülse (3) und der Antriebshülse (4) geschlungen ist.

6. Vorrichtung nach den Ansprüchen 4 und 5, dadurch gekennzeichnet, daß die Führungshülse (3) an den an den Umschlingungsbereich durch die Schlingfederkupplung (34) anschließenden Abschnitt radial nach außen abragende, fingerartige Fortsätze (35) aufweist, zwischen welche axial ausgerichtete Nasen (36) eines die Schlingfederkupplung (34) koaxial umschließenden Rohrstückes (37) eingreifen, wobei den abstehenden Nasen (36) abgewandt ein Schlitz oder eine Öffnung zum Eingriff eines radial abstehenden Endes (38) der Schlingfederkupplung (34) vorgesehen ist.

7. Vorrichtung nach Anspruch 1, dadurch gekennzeichnet, daß die Rastelemente (40) zur Arretierung der Drehbewegung der Führungshülse (3) im Gehäuse (5) Teil eines Tiefenanschlages (41) sind, von einem Tiefenanschlag (41) auslösbar sind und/oder mittels eines an der Außenoberfläche des Gehäuses (5) zugänglichen, manuell bedienbaren Betätigungselementes auslösbar sind.

8. Vorrichtung nach den Ansprüchen 6 und 7, dadurch gekennzeichnet, daß der zwischen den radial abstehenden Fortsätzen (35) der Führungshülse (3) in Umfangsrichtung gesehen verbleibende Freiraum (A) größer ist als die Summe der Abmessungen (B, C) eines der im Gehäuse verschiebbaren Rastelemente (40) und einer der vom Rohrstück (37) abstehenden Nasen (36) in Umfangsrichtung gemessen.

9. Vorrichtung nach Anspruch 8, dadurch gekennzeichnet, daß in Arretierstellung der Führungshülse (3) sowohl die im Gehäuse (5) verschiebbaren Rastelemente (40) als auch die vom Rohrstück (37) abstehenden Nasen (36) von einander axial gegenüberliegenden Seiten zwischen die radial abstehenden Fortsätze (35) der Führungshülse (3) eingreifen.

10. Vorrichtung nach den Ansprüchen 1 und 7, dadurch gekennzeichnet, daß die Rastelemente (40) Teil eines rohrförmigen, federbelastet in axialer Richtung gegen das Gehäuse (5) verschiebbaren Tiefenanschlages (41) sind, welcher den vorderen Bereich der Führungshülse (3) koaxial umgibt.

11. Vorrichtung nach Anspruch 1, dadurch gekennzeichnet, daß zwischen der Führungshülse (3) und dem Gehäuse (5) oder dem einen Gehäuseteil bildenden Tiefenanschlag (41) ein als Freilauf wirkendes Radiallager (47) eingesetzt ist.

## Claims

1. A device for setting a self-boring clamping fastener (10), with clamping jaws (2) retained in a sleeve-like mounting member (1) for gripping a tension mandrel (9) of the clamping fastener (10), wherein at its end remote from the clamping jaws (2) the mounting member (1) has an external thread (18) and engages into a threaded bore (20) of a drive sleeve (4) which can be coupled to a rotary drive (25), wherein the mounting member (1) can be locked against rotation, characterised in that the sleeve-like mounting member (1) is axially displaceable in a guide sleeve (3) but is retained secured against rotation, in that the guide sleeve (3) and the drive sleeve (4) can be coupled together in a force-locking and/or form-locking manner in a driving direction of rotation, in that the guide sleeve (3) and the drive sleeve (4) are rotatably mounted in a housing (5) which can be securely connected with the housing (24) of the drive (25), in that the guide sleeve (3) can be locked against rotation by means of detent members (40) retained displaceably in the housing (5), and in that the guide sleeve (3) together with the mounting member (1) is rotatable in the housing (5) in the manner of a freewheel in one direction only.

2. A device according to Claim 1, characterised in that the drive sleeve (4) accommodates axially displaceably a drive member (26) which can be coupled directly with the rotary drive (25), wherein at its end remote from the rotary drive (25) the drive member (26) has engagement claws (27) which can be brought into operative connection with a claw ring (29) formed inside the drive member (4).

3. A device according to Claim 2, characterised in that the claws (27, 30) project freely axially arranged coaxially with the centre axis of the drive member (26) and the drive sleeve (4), and at its lateral boundaries, viewed in the direction of rotation, have mutually converging engagement surfaces (31, 32), wherein the free end region (33) of the claws (30) is formed by an obliquely extending plane, viewed in the direction of rotation.

4. A device according to Claims 1 to 3, characterised in that the coupling disposed between the guide sleeve (3) and the drive sleeve (4) and acting only in the direction of rotation is in the form of an loop spring coupling (34).

5. A device according to Claims 1 to 4, characterised in that in their mutually facing end regions the guide sleeve (3) and the drive sleeve (4) are of equal diameter, wherein the loop spring coupling (34) is looped over approximately equal length sections of the guide sleeve (3) and of the drive sleeve (4).

6. A device according to Claims 4 and 5, characterised in that at the portion adjoining the looping region by the loop spring coupling (34) the guide sleeve (3) has finger-like extensions (35) which project radially outwards and between which engage axially aligned projections (36) of a tubular member (37) coaxially surrounding the loop spring coupling (34), wherein remote from the protruding projections (36) a slot or an opening is provided for the engagement of one radially protruding end (38) of the loop spring coupling (34).

7. A device according to Claim 1, characterised in that the detent members (40) for arresting the rotating movement of the guide sleeve (3) in the housing (5) are part of a depth-control stop (41), they can be released from a depth-control stop (41) and/or they can be released by means of a manually operable operating member accessible on the outer surface of the housing (5).

8. A device according to Claims 6 and 7, characterised in that the free space (A) remaining between the radially protruding extensions (35) of the guide sleeve (3), viewed in circumferential direction, is greater than the sum of the dimensions (B, C) of one of the detent members (40) displaceable in the housing and one of the projections (36) protruding from the tubular member (37), measured in circumferential direction.

9. A device according to Claim 8, characterised in that in the locking position of the guide sleeve (3) both the detent members (40) displaceable in the housing (5) and the projections (36) protruding from the tubular member (37) engage from axially opposite ends between the radially projecting extensions (35) of the guide sleeve (3).

10. A device according to Claims 1 and 7, characterised in that the detent members (40) are part of a tubular, depth-control stop (41) which is spring-loaded in axial direction, is displaceable towards the housing (5) and which coaxially surrounds the front region of the guide sleeve (3).

11. A device according to Claim 1, characterised in that a radial bearing (47) acting as a freewheel is inserted between the guide sleeve (3) and the housing (5) or the depth-control stop (41) forming a part of the housing.

## Revendications

1. Dispositif pour placer un organe autotaraudeur, de serrage par pincement (10), comprenant des mors (2) maintenus dans une pièce de réception (1) en forme de douille, pour prendre la broche de traction (9) de l'organe de serrage par pincement (10), la pièce de réception (1) ayant un filetage extérieur (18) à son extrémité opposée à celle des mors (2), et venant prendre dans un taraudage (20) d'une douille d'entraînement (4) susceptible d'être couplée à un moyen d'entraînement en rotation (25), la pièce de réception (1) pouvant se bloquer en rotation, caractérisé en ce que la pièce de réception (1) en forme de douille, coulisse axialement dans une douille de guidage (3) en étant toutefois maintenue contre la rotation, la douille de guidage (3) et la douille d'entraînement (4) pouvant être couplées l'une à l'autre dans un sens d'entraînement, par une liaison par la force et/ou la forme, la douille de guidage (3) et la douille d'entraînement (4) étant montées en rotation dans un boîtier (5) relié solidairement au boîtier (24) du moyen d'entraînement (5), la douille de guidage (3) se bloquant en rotation par des éléments d'accrochage (40) maintenus coulissants dans le boîtier (5) et la douille de guidage (3) ainsi que la pièce de réception (1) tournent seulement dans un sens de rotation dans le boîtier (5) à la manière d'une roue libre.

2. Dispositif selon la revendication 1, caractérisé en ce que la douille d'entraînement (4) reçoit une pièce d'entraînement (26) coulissant axialement et susceptible d'être couplée directement au moyen d'entraînement en rotation (25), la pièce d'entraînement (26) ayant des griffes d'entraînement (27) à son extrémité opposée à celle du moyen d'entraînement en rotation (25), ces griffes pouvant coopérer avec une bague à griffes (29) prévue à l'intérieur de la pièce d'entraînement (4).

3. Dispositif selon la revendication 2, caractérisé en ce que les griffes (27, 30) sont librement en saillie, axialement, coaxialement à l'axe géométrique de la pièce d'entraînement (26) et de la douille d'entraînement (4) et ces griffes comportent des surfaces d'attaque (31, 32) convergentes l'une vers l'autre au niveau de leurs bords latéraux dans le sens de rotation, la zone d'extrémité (33), libre, des griffes (30) étant formée par un plan en biais dans le sens de rotation.

4. Dispositif selon les revendications 1 à 3, caractérisé en ce que l'embrayage prévu entre la douille de guidage (3) et la douille d'entraînement (4), et qui n'agit que dans un sens de rotation, est un embrayage à ressort enveloppant (34).

5. Dispositif selon les revendications 1 et 4, caractérisé en ce que la douille de guidage (3) et la douille d'entraînement (4) ont le même diamètre extérieur dans leur zone d'extrémité tournée l'une vers l'autre, l'embrayage à ressort enveloppant (34) étant prévu sur pratiquement les mêmes zones longitudinales de la douille de guidage (3) et de la douille d'entraînement (4).

6. Dispositif selon les revendications 4 et 5, caractérisé en ce que la douille de guidage (3) a sur son segment adjacent à la zone d'enveloppement par l'embrayage à ressort enveloppant (34), des prolongements (35) en forme de doigts, radialement en saillie, et entre lesquels viennent prendre des becs (36) alignés axialement et appartenant à une pièce tubulaire (37) entourant coaxialement l'embrayage à ressort enveloppant (34), et de l'autre côté des becs (36) en saillie il est prévu une fente ou une ouverture pour la prise d'une extrémité (38) radialement en saillie de l'embrayage à ressort enveloppant (34).

7. Dispositif selon la revendication 1, caractérisé en ce que les éléments d'accrochage (40) font partie d'une butée de profondeur (41) pour bloquer le mouvement de rotation de la douille de guidage (3) dans le boîtier (5), et peuvent être déclenchés par une butée de profondeur (41) et/ou peuvent être déclenchés à l'aide d'un élément de manoeuvre à commande manuelle accessible à la surface extérieure du boîtier (5).

8. Dispositif selon les revendications 6 et 7, caractérisé en ce que le volume libre (A) qui subsiste entre les prolongements (35) radialement en saillie de la douille de guidage (3), dans la direction périphérique, est plus grand que la somme des dimensions (B, C) d'un élément d'accrochage (40) coulissant dans le boîtier et d'un bec (36) en saillie par rapport à l'élément tubulaire (37), lorsqu'on mesure dans la direction périphérique.

9. Dispositif selon la revendication 8, caractérisé en ce qu'en position de blocage de la douille de guidage (3) à la fois les éléments d'accrochage (40) coulissant dans le boîtier (5) que les becs (36) en saillie de la pièce tubulaire (37) viennent prendre à partir de côtés axialement en regard entre les prolongements radialement en saillie (35) de la douille de guidage (3).

10. Dispositif selon les revendications 1 et 7, caractérisé en ce que les éléments d'accrochage (40) font partie d'une butée de profondeur (41), pouvant coulisser, tubulaire, chargée par un ressort en direction axiale contre le boîtier (5), et entoure la zone avant de la douille de guidage (3).

11. Dispositif selon la revendication 1, caractérisé en ce qu'un palier radial (45) fonctionnant en roue libre est prévu entre la douille de guidage (3) et le boîtier (5) ou entre la butée de profondeur (41) formant une partie de boîtier,
